(19) Europäisches Patentamt
European Patent Office
Office européen des brevets

(11) Numéro de publication : **0 384 822 B1**

(12) **FASCICULE DE BREVET EUROPEEN**

(45) Date de publication du fascicule du brevet : **29.09.93 Bulletin 93/39**

(51) Int. Cl.$^5$ : **C08L 23/08,** C08L 65/00, C08L 23/34

(21) Numéro de dépôt : **90400452.0**

(22) Date de dépôt : **19.02.90**

# (54) Elastomère thermoplastique à base de copolymère éthylène/alpha-oléfine et de polynorbornène.

(30) Priorité : **22.02.89 FR 8902304**
**28.04.89 FR 8905729**
**30.01.90 FR 9001064**

(43) Date de publication de la demande : **29.08.90 Bulletin 90/35**

(45) Mention de la délivrance du brevet : **29.09.93 Bulletin 93/39**

(84) Etats contractants désignés : **AT BE CH DE DK ES FR GB GR IT LI LU NL SE**

(56) Documents cités :
**EP-A- 0 256 724**
**US-A- 4 203 884**

(73) Titulaire : **ELF ATOCHEM S.A.**
**4 & 8, Cours Michelet La Défense 10**
**F-92800 Puteaux (FR)**

(72) Inventeur : **Hert, Marius**
**13, Avenue Lepercq**
**F-60550 Verneuil en Halatte (FR)**
Inventeur : **Doussan, Christian**
**21, Avenue Saint Exupéry**
**F-60180 Nogent sur Oise (FR)**
Inventeur : **Maindron, Guy**
**19, Rue Bontemps**
**F-60940 Angicourt (FR)**

(74) Mandataire : **Rochet, Michel**
**ELF ATOCHEM S.A. Département Propriété Industrielle 4-8, Cours Michelet La Défense 10 - Cedex 42**
**F-92091 Paris-La-Défense (FR)**

**EP 0 384 822 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions thermoplastiques et, plus particulièrement, des compositions élastomères thermoplastiques comprenant des mélanges de copolymère éthylène/$\alpha$-oléfine et de polynorbornène.

Les polymères de relativement haut poids moleculaire sont généralement incompatibles entre eux. Lorsqu'on mélange deux polymères de nature différente, le mélange possède généralement de médiocres propriétés mécaniques telles que résistance à la rupture et allongement à la rupture Un couple de polymères est rarement suffisamment compatible pour former un mélange possédant des propriétés mécaniques aussi bonnes que celles du moins performant d'entre eux. Cependant, lorsque deux polymères sont compatibles, le mélange résultant peut montrer une combinaison intéressante de propriétés, c'est-à-dire que, outre de bonnes propriété mécaniques, il peut également posséder d'autres caractéristiques favorables.

Ainsi, le brevet US-A-4 203 884 enseigne que des compositions comprenant le mélange d'une polyoléfine cristalline thermoplastique, de polynorbornène et d'une quantité de plastifiant du polynorbornène suffisante pour abaisser sa température de transition vitreuse jusqu'à la gamme des caoutchoucs possèdent des propriétés intéressantes. Plus particulièrement, ce document divulgue des compositions comprenant un mélange de 75 à 10 parties en poids de polyoléfine, de 25 à 90 parties en poids de polynorbornène et, pour 100 parties en poids de polynorbornène, de 30 à 400 parties en poids de plastifiant, lesdites compositions étant élastoplastiques, c'est-à-dire qu'elles possèdent des propriétés élastomériques tout en pouvant être transformées comme des thermoplastiques. A l'état fondu, selon cette technique, une partie du plastifiant peut se trouver présent dans la phase polyoléfine thermoplastique. Après refroidissement, le plastifiant migre substantiellement de la phase polyoléfine cristalline vers la phase polynorbornène pour faire partie de cette dernière. De la sorte, le plastifiant améliore la thermoplasticité ou la capacité de mise en oeuvre de la composition. En règle générale, pour un degré de thermoplasticité donné, la composition requiert d'autant moins de polyoléfine que la quantité de plastifiant est plus importante.

Le brevet US-A-4 203 884 divulgue également des compositions comprenant un mélange de 10 à 90 parties en poids de polyoléfine cristalline et de 90 à 10 parties en poids de polynorbornène réticulé dispersé sous forme de particules de petite taille, et de plastifiant en quantité suffisante pour abaisser la température de transition vitreuse du polynorbornène jusqu'à la gamme des caoutchoucs. Ainsi la réticulation du polynorbornène améliore le compromis des propriétés de la composition, en particulier la résistance à la rupture, la résistance aux solvants et les propriétés à haute température. De telles compositions sont obtenues par un procédé de vulcanisation dynamique selon lequel un mélange de polynorbornène, de plastifiant, de polyoléfine et de réticulants est malaxé à une température suffisante pour réticuler le polynorbornène.

Parmi les polyoléfines cristallines thermoplastiques utilisables selon le brevet US-A-4 203 884, on peut citer le polyéthylène et le polypropylène, ce dernier étant préféré comme le confirme la comparaison des résultats illustrés par les tableaux 1 et 2 du document cité. En effet, ce document enseigne que des compositions comprenant de 30 à 60 parties en poids de polynorbornène réticulé et de 70 à 40 parties en poids d'un polyéthylène de densité 0,960 g/cm$^3$ possèdent :

- un module à 100% d'allongement au moins égal à 6,8 MPa, c'est-à-dire trop élevé, et
- un allongement à la rupture ne dépassant pas 220%, c'est-à-dire trop faible pour la plupart des applications des élastomères thermoplastiques.

Les expériences de la demanderesse ont de plus démontré que ces mêmes compositions possèdent une déformation rémanente à la compression trop élevée et une dureté Shore A trop élevée pour la plupart des applications des élastomères thermoplastiques.

Un premier problème que la présente invention vise à résoudre consiste donc à choisir, parmi la vaste gamme des polymères d'éthylène, un polymère capable d'apporter à une composition élastoplastique à base de polynorbornène et de plastifiant un compromis de propriétés intéressantes la rendant apte à la plupart des applications des élastomères thermoplastiques et en particulier :

- une dureté Shore A ne dépassant pas 65 environ,
- un allongement à la rupture qui n'est pas inférieur à 250% environ,
- un module à 100% d'allongement qui n'est pas supérieur à 6 MPa environ et de préférence pas supérieur à 3 MPa environ, et
- une déformation rémanente à la compression pendant 22 heures à 70°C selon la norme ASTM-D 395 ne dépassant pas 45%.

La demanderesse a mis en évidence le fait que cet objectif peut être atteint en ayant recours à un copolymère éthylène/$\alpha$-oléfine et en sélectionnant les paramètres caractéristiques de ce copolymère dans des gammes étroites.

Par ailleurs, le polynorbornène formulé et vulcanisé est un caoutchouc assez sensible à la dégradation

thermique en raison de son taux d'insaturation élevé. Lorsque le système de vulcanisation utilisé est à base de soufre, il conduit à des pontages à liaisons soufre-soufre qui rendent le polynorbornène vulcanisé d'autant plus fragile à la température. Ainsi, il est connu que les caoutchoucs formulés à partir de polynorbornène perdent généralement l'essentiel de leurs propriétés mécaniques (notamment résistance et allongement à la rupture) après des vieillissements de longue durée à des températures supérieures à 80°C.

Plusieurs solutions ont déjà ète proposées pour améliorer la tenue au vieillissement thermique des caoutchoucs formulés à base de polynorbornène. Parmi ces solutions on peut citer notamment l'addition au caoutchouc formulé d'au moins un antioxydant de type phénolique ou bien tel que le sel de zinc du mercaptobenzoimidazole. On peut citer également le recours à des composés réactifs capables de former des liaisons carbone-oxygène ou carbone-carbone, tels que des résines phénoliques généralement associées à des composés accélérateurs tels que des acides de Lewis ou certains oxydes métalliques (en particulier ceux de zinc et de magnésium). A titre d'exemple d'un tel système réatif, on peut citer la combinaison de chlorure stanneux et d'une résine phénolique de formule :

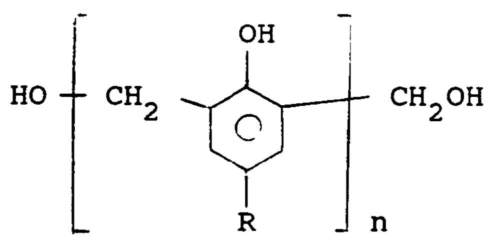

dans laquelle : n = 4 ou 5 et R désigne un radical alkyle. Les solutions précitées pour améliorer la tenue au vieillissement thermique des caoutchoucs formulés à base de polynorbornène peuvent naturellement être combinées pour renforcer leurs effets. Toutefois, même dans ce cas, on observe généralement que lesdits caoutchoucs perdent plus de 80% de leur résistance à la rupture après un vieillissement de 7 jours à 100°C et perdent la totalité de leurs propriétés mécaniques (allongement et résistance à la rupture) après 14 jours de vieillissement à 100°C. Cette situation constitue bien évidemment un frein à l'utilisation des caoutchoucs formulés à base de polynorbornène dans un certain nombre d'applications.

Un second problème que la présente invention vise à résoudre consiste donc à mettre au point un moyen efficace pour améliorer la tenue au vieillissement thermique de caoutchoucs formulés à base de polynorbornène, et en particulier pour maintenir l'essentiel de leurs propriétés mécaniques après un vieillissement de longue durée à des températures supérieures à 80°C.

La présente invention a pour premier objet une composition comprenant un mélange d'environ 20 à 70 parties en poids de polynorbornène, d'environ 80 à 30 parties en poids d'une polyoléfine cristalline et d'une quantité de plastifiant du polynorbornène suffisante pour abaissser sa température de transition vitreuse jusqu'à la gamme des caoutchoucs, caractérisée en ce que comme polyoléfine cristalline, on choisit un copolymère d'éthylène et d'au moins une α-oléfine ayant de 3 à 10 atomes de carbone, ledit copolymère ayant une densité comprise entre 0,89 et 0,93 environ, un taux de cristallinité compris 15 et 50% environ et un indice de fluidité compris entre 0,5 et 15 dg/min environ. De tels copolymères sont bien connus de l'homme de l'art et peuvent être préparés par divers procédés, soit sous basse pression et à température modérée, soit sous haute pression et à température élevée. Correspondant à la gamme de densité indiquée, leur teneur molaire en α-oléfine est généralement comprise entre 1 et 10% environ, selon la nature de l'α-oléfine. Parmi les α-oléfines pouvant entrer dans la constitution de ces copolymères, on citera tout particulièrement le propylène, le butène-1, l'hexène-1, le méthyl-4 pentène-1 et l'octène-1. Parmi les copolymères éthylène/α-oléfine utilisables selon la présente invention, on préfère avantageusement des terpolymères éthylène/propylène/butène-1, ainsi que des copolymères d'éthylène et d'α-oléfines supérieures (c'est-à-dire ayant au moins 4 atomes de carbone), conformes au brevet européen n° 070 220. Ces derniers sont des copolymères d'hétérogénéité macromoléculaire particulièrement marquée, c'est-à-dire dans lesquels la teneur en α-oléfine peut s'écarter notablement, selon les fractions cristallines ou amorphes dans lesquelles on la mesure, de la teneur moyenne en α-oléfine dans le copolymère. Dans certains copolymères de ce type, l'hétérogénéité peut être telle que la teneur en α-oléfine dans une fraction cristalline soit 1/10$^{e}$ (un dixième) de la teneur moyenne et que la teneur en α-oléfine dans une fraction amorphe soit jusqu'à 5 fois la teneur moyenne. Par ailleurs, de tels copolymères hétérogènes sont avantageusement tels que leurs fractions cristallines présentent un pic unique de fusion à une température comprise entre 110° et 130°C environ. Parmi leurs autres caractéristiques préférentielles, on peut citer :

- un taux d'insaturation global compris entre 0,25 et 0,50 double liaison environ pour 1000 atomes de carbone,

- un indice de polydispersité compris entre 3 et 9 environ lorsque le copolymère comprend une seule α-oléfine, entre 6 et 12 environ lorsque le copolymère comprend au moins deux α-oléfines,
- un poids moléculaire moyen en nombre $M_n$ compris entre 12 000 et 60 000 environ.

Par polynorbornène au sens de la présente invention, on entend un polymère ou copolymère amorphe du bicyclo[2,2,1] heptène-2 et de ses dérivés substitués tels que décrit dans le brevet US-A-3 676 390. Parmi les plastifiants du polynorbornène capables d'abaisser sa température de transition vitreuse jusqu'à la gamme des caoutchoucs, on peut citer les huiles lourdes aromatiques, naphténiques ou paraffiniques dérivées du pétrole, de point de congélation inférieur à 0°C et de point éclair supérieur à 180°C, et les diesters de l'acide phtalique tels que les phtalates de dioctyle ou de didodécyle. Ces plastifiants peuvent être utilisés purs ou en mélange.

En vue de résoudre le second problème technique évoqué ci-dessus, la composition selon l'invention peut en outre comprendre une quantité efficace d'un caoutchouc de polyéthylène chlorosulfoné, ce dernier jouant essentiellement le rôle d'un agent de stabilisation thermique. Le caoutchouc de polyéthylène chlorosulfoné utilisable conformément à la présente invention peut comprendre de 10 à 50% en poids environ de chlore et de 0,5 à 3% en poids environ de soufre. Selon les observations de la Société déposante, il semble que la protection contre le vieillissement thermique apportée par la présence du caoutchouc de polyéthylène chlorosulfoné soit d'autant plus efficace que la teneur en chlore dans ce dernier est plus élevée. Un exemple représentatif des caoutchoucs de polyéthylène chlorosulfoné utilisables conformément à la présente invention est constitué par les produits commercialisés par la société E.I. DU PONT DE NEMOURS sous la marque HYPALON. La quantité efficace de caoutchouc de polyéthylène chlorosulfoné à utiliser dans les compositions selon l'invention est à rapporter à la quantité de polynorbornène présente dans ladite composition puisque c'est le constituant responsable à titre principal de la dégradation thermique. Par quantité efficace au sens de la présente invention, on entend généralement une quantité comprise entre 2% et 40% en poids environ par rapport au polynorbornène.

Afin d'améliorer le compromis des propriétés des compositions selon l'invention, il est avantageux d'effectuer la réticulation du polynorbornène, par exemple par un procédé de vulcanisation dynamique. La présente invention a donc pour second objet une composition thermoplastique comprenant un mélange d'environ 20 à 70 parties en poids de polynorbornène réticulé, d'environ 80 à 30 parties en poids d'une polyoléfine cristalline et d'une quantité de plastifiant du polynorbornène suffisante pour abaisser sa température de transition vitreuse jusqu'à la gamme des caoutchoucs, caractérisée en ce que comme polyoléfine cristalline, on choisit un copolymère d'éthylène et d'au moins une α-oléfine ayant de 3 à 10 atomes de carbone, ledit copolymère ayant une densité comprise entre 0,89 et 0,93 environ, un taux de cristallinité compris entre 15 et 50% environ et un indice de fluidité compris entre 0,5 et 15 dg/min environ. Le copolymère éthylène/α-oléfine présent dans la composition thermoplastique selon l'invention a déjà été décrit ci-dessus de manière détaillée au sujet des compositions comprenant un polynorbornène non réticulé. Dans les compositions thermoplastiques selon l'invention, le polynorbornène plastifié réticulé se présente avantageusement sous forme de petites particules dispersées, ce qui permet à la composition d'être transformée et mise en oeuvre comme n'importe quel matériau thermoplastique.

En général, les systèmes de réticulation adaptés pour la vulcanisation de caoutchouc diénique peuvent être utilisés pour la réticulation du polynorbornène dans les compositions thermoplastiques selon l'invention. Parmi les agents réticulants satisfaisants pour les caoutchoucs, on peut citer les agents de vulcanisation à base de soufre, de peroxyde, de résine phénolique, de composés azo, maléimido, quinoïde et uréthane, tels que, par exemple, du soufre libre ou des composés donneurs de soufre comme le disulfure de tétraméthylthiurame, le disulfure de thiurame, le disulfure de benzothiazyle et l'hexasulfure de dipentaméthylène thiurame, ou encore la m-phénylène bis-maléimide, la benzoquinone dioxime, le peroxyde de plomb, la diorthotolyl guanidine, la 4,4'-dithiodimorpholine. Ces agents de vulcanisation peuvent être avantageusement utilisés en association avec au moins un activateur ou accélérateur de vulcanisation, tel que l'oxyde de zinc, l'oxyde de magnésium, le benzothiazole sulfamide, le chlorure d'étain, le dibutyldithiocarbamate de zinc, le phényléthyldithiocarbamate de zinc,l'éthyldithiocarbamate de tellure, etc. Lorsque du soufre libre ou un composé donneur de soufre est utilisé comme agent de vulcanisation, il est préférable d'utiliser une quantité importante d'activateur ou accélérateur de vulcanisation, c'est-à-dire, par exemple, un poids d'activateur ou accélérateur compris entre 1 et 3 fois environ le poids d'agent de vulcanisation.

Les constituants du système de réticulation, et notamment l'agent de vulcanisation, sont utilisés dans les proportions usuelles connues de l'homme de l'art pour obtenir la réticulation quasi-complète du polynorbornène sans pour autant réduire son élasticité au point qu'il ne soit plus caoutchouteux. Dans les compositions thermoplastiques selon l'invention, le polynorbornène est de préférence réticulé jusqu'au point où pas plus de 10% environ, de préférence pas plus de 5% environ, du polynorbornène puisse être extrait par un solvant, tel que le xylène bouillant, dans lequel le polynorbornène non-réticulé est complètement soluble, ainsi que le copolymère éthylène/α-oléfine. Ce test d'extraction permet au passage de vérifier que le copolymère éthylène/α-oléfine n'a pas lui-même été substantiellement réticulé, ce qui aurait pour effet de nuire à la thermoplasticité de la composition.

Pour certaines applications des compositions selon l'invention, leur résistance à la rupture et/ou la résistance aux huiles peuvent être améliorées, sans pour autant nuire au compromis favorable de propriétés décrit précédemment, en remplaçant partiellement le copolymère éthylène/α-oléfine par un polymère cristallin essentiellement à base de propylène. Selon cette variante de l'invention, on remplace jusqu'à 60% en poids, et de préférence jusqu'à 40% en poids, du copolymère éthylène/α-oléfine par un polymère, d'indice de fluidité (déterminé selon la norme ASTM D 1238 à 230°C sous 2,16 kg) compris entre 0,3 et 10 dg/min., comprenant au moins 80% en moles de motifs dérivés du propylène et au plus 20% en moles de motifs dérivés d'un comonomère choisi parmi l'éthylène et les α-oléfines ayant de 4 à 12 atomes de carbone. Ledit polymère est de nature cristalline et, lorsqu'il est constitué uniquement de motifs dérivés du propylène, de préférence isotactique.

Les compositions thermoplastiques selon l'invention peuvent en outre comprendre une quantité efficace d'un caoutchouc de polyéthylène chlorosulfoné tel que décrit ci-dessus au sujet des compositions comprenant un polynorbornène non-réticulé.

Les propriétés des compositions selon l'invention peuvent être avantageusement modifiées, pour les besoins de certains usages particuliers, par l'addition d'ingrédients conventionnels tels que :

- pigments blancs (oxyde de titane) ou colorés,
- agents de couplage, tels que silanes ou titanates,
- antidégradants tels que, par exemple, le sel de zinc du mercaptobenzimidazole,
- stabilisants, tels que, par exemple, la 2,2,4-triméthyl-1,2-dihydroquinoléine polymérisée,
- adjuvants de mise en oeuvre, tels que des amines aliphatiques à chaîne longue, des sels de l'acide stéarique,
- charges pulvérulentes, telles que noir de carbone, silice, kaolin, alumine, argile, alumino-silicate, talc, carbonate, et
- lubrifiants, tels que l'acide stéarique.

En particulier, l'addition de charges pulvérulentes a pour effet d'améliorer la résistance à la rupture et, dans certains cas, l'allongement à la rupture de la composition thermoplastique selon l'invention. La quantité de charge pouvant être incorporée à la composition peut atteindre jusqu'à 150 parties environ pour 100 parties en poids de polynorbornène, cette quantité étant bien évidemment variable selon la nature de la charge.

Enfin, pour les applications dans lesquelles on recherche une résistance élevée à l'ozone et/ou au vieillissement thermique, les compositions selon l'invention pourront comprendre un élastomère oléfinique, celui-ci venant en remplacement partiel du polynorbornène, de telle sorte que la somme du copolymère éthylène/α-oléfine, du polynorbornène et de l'élastomère oléfinique soit égale à 100 parties en poids. Comme élastomère oléfinique utilisable dans les compositions selon l'invention, on peut citer notamment un terpolymère d'éthylène avec au moins une α-oléfine ayant de 3 à 6 atomes de carbone et au moins un diène. Plus particulièrement, on préfère les terpolymères éthylène-propylène-diène, le diène étant choisi parmi les diènes linéaires ou cycliques, conjugués ou non-conjugués comme par exemple le butadiène, l'isoprène, le 1,3-pentadiène, le 1,4-pentadiène, le 1-4-hexadiène, le 1,5-hexadiène, le 1,9 décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l,isopropylidène tétrahydroindène. De tels terpolymères élastomériques utilisables conformément à la présente invention comprennent en général entre 15% et 60% environ en moles de motifs dérivés du propylène et entre 0,1% et 20% environ en moles de motifs dérivés du diène.

La proportion d'élastomère oléfinique utilisable dans les compositions selon l'invention est généralement telle qu'il remplace jusqu'au tiers du poids du polynorbornène présent. Ainsi, une composition comprenant 30 parties de copolymère éthylène/α-oléfine pourra comprendre jusqu'à 23 parties en poids environ d'élastomère oléfinique et par conséquent au moins 47 parties en poids environ de polynorbornène.

Les compositions thermoplastiques selon l'invention, dans lesquelles le polynorbornène est réticulé, sont de préférence préparées par vulcanisation dynamique, c'est-à-dire en malaxant un mélange de polynorbornène, de plastifiant, de copolymère éthylène/α-oléfine et de système de réticulation (tel que défini ci-dessus) à une température suffisante et pendant une durée suffisante pour réticuler le polynorbornène. Le malaxage peut être effectué dans un appareillage conventionnel tel que par exemple un malaxeur Banbury, un malaxeur Brabender, un malaxeur Rhéocord ou une extrudeuse, à une température comprise entre 110° et 220°C environ pendant une durée comprise entre 3 et 15 minutes environ, cette durée étant d'autant moins longue que la température est plus élevée. Avant cette étape de malaxage, le mélange peut être d'abord homogénéisé dans un mélangeur interne à température modérée comprise entre 60° et 120°C environ.

Les compositions selon l'invention peuvent être utilisées pour fabriquer des produits finis et articles industriels par les techniques d'extrusion, d'injection-moulage et de moulage par compression.

En particulier, elles peuvent être extrudées sur des extrudeuses de même type que celles couramment utilisées pour les polyoléfines, c'est-à-dire ayant un rapport longueur/diamètre de vis généralement compris entre 18 et 28 environ et un taux de compression de préférence voisin de 3,0. Le profil de température affiché le long de la vis est généralement assez plat, la différence de température entre l'entrée et la filière étant de 10°C à 20°C environ. La température de la composition dans l'extrudeuse (température de la matière) peut être comprise entre 150°C et 220°C environ, de préférence entre 160° et 180°C. Ces extrudeuses sont équipées de filières profilés (par exemple profilés de menuiserie industrielle). La vitesse d'extrusion se situe entre 15 et 50 mètres par minute environ et l'extrudat ne subit pratiquement aucun étirage en sortie ; il est refroidi dans un bain d'eau et passe sur un banc de tirage dont la vitesse est généralement comprise entre 100% et 110% environ de la vitesse d'extrusion.

Les compositions selon l'invention peuvent également être injectées au moyen de presses à injection de même type que celles couramment utilisées pour le polyéthylène haute et basse densité et le polypropylène. La température de la matière dans la presse, fonction de la proportion de plastifiant dans la composition, est généralement comprise entre 120°C et 200°C environ. Cette température est d'autant plus faible que la proportion de plastifiant est plus élevée. Il convient généralement d'utiliser une pression d'injection nettement plus élevée que la pression de service, de manière à augmenter la fluidité de la matière pendant l'injection. A titre d'exemple, on pourra utiliser une pression d'injection de 700 bars lorsque la pression de service est de 150 bars. La vitesse de la vis de plastification pourra couramment atteindre 100 à 200 tours par minute environ. Selon la cadence d'injection recherchée, la température du moule pourra être choisie entre -10°C et +40°C environ.

Des applications concrètes des compositions selon l'invention comprennent notamment des tuyaux souples, des joints pour les industries du bâtiment et de l'automobile, des soufflets de protection pour l'industrie automobile, des articles injectés, tels que des roues pleines pour l'industrie du jouet.

Exemple 1 (comparatif)

Dans une première étape, du polynorbornène est formulé avec un plastifiant, une charge, un antidégradant, un agent de vulcanisation, un pigment et un lubrifiant, dans un mélangeur interne tournant à 100 tours/min pendant 6 minutes, régulé à 80°C, puis la formulation obtenue est mise sous forme de feuille par passage sur un mélangeur à cylindre régulé à 60°C dans lequel on ajoute un accélérateur de vulcanisation. Dans une seconde étape, la masse caoutchoutique est additionnée d'une polyoléfine cristalline et reprise sur un malaxeur Brabender tournant à 90 tours/min à une température de 180°C pendant 8 minutes. La composition résultante est récupérée et moulée en plaques de 2,5 mm par compression, sur lesquelles on mesure les propriétés suivantes :

- dureté Shore A déterminée selon la norme ASTM-D 2240,
- allongement à la rupture, exprimé en % et déterminé selon la norme ASTM-D 412,
- module à 100% d'allongement, exprimé en MPa et déterminé selon la norme ASTM-D 412,
- set d'allongement, exprimé en % et déterminé selon la norme ASTM-D 412 (après un allongement de 100%).

Enfin, la déformation rémanente à la compression (DRC) pendant 22 heures à 70°C est mesurée sur des plots de 12,5 mm écrasés de 25%, déterminée selon la norme ASTM-D-395 et exprimée en %. Dans cet exemple comparatif :

- la polyoléfine cristalline est un polyéthylène conforme à l'enseignement du brevet US-A-4 203 884, de densité 0,962 et d'indice de fluidité 5,3 dg/min., commercialisé par la Société SOLVAY sous la dénomination ELTEX A 1050 F,
- le polynorbornène utilisé est commercialisé par la demanderesse sous la dénomination NORSOREX,
- le plastifiant est une huile paraffinique de point éclair égal à 225°C et de point de congélation égal à -10°C, commercialisée par la Société EXXON sous la dénomination FLEXON 876,
- la charge pulvérulente est du kaolin calciné,
- l'antidégradant est le sel de zinc du mercaptobenzimidazole commercialisé par la Société SAFIC-ALCAN sous la dénomination ZMBI,
- l'agent de vulcanisation est une résine phénolique de formule :

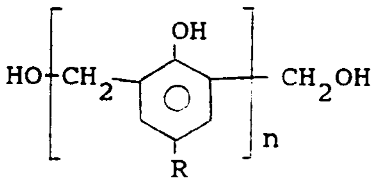

dans laquelle n = 4 ou 5 et R désigne un radical alkyle, commercialisée par la Société SCHENECTADY sous l'appellation SP 1045,

- l'agent de stabilisation thermique est un élastomère de polyéthylène chlorosulfoné commercialisé par la Société DU PONT DE NEMOURS sous la dénomination HYPALON 20,
- l'accélérateur de vulcanisation est un mélange équipondéral de chlorure stanneux $SnCl_2$, $2H_2O$ et d'oxyde de zinc,
- le pigment est l'oxyde de titane, et
- le lubrifiant est l'acide stéarique.

Les quantités pondérales des divers ingrédients de la composition sont indiquées dans le tableau ci-après, ainsi que les résultats des mesures de propriétés effectuées comme décrit ci-dessus.

Exemples 2 à 5

En opérant dans les mêmes conditions qu'à l'exemple 1, et en utilisant les mêmes ingrédients, à l'exception de la nature de la polyoléfine cristalline, on prépare différentes compositions dont les propriétés sont indiquées dans le tableau I ci-après.

La polyoléfine cristalline utilisée aux exemples 2 et 4 est un copolymère éthylène/butène-1, de densité 0,910, possédant un indice de fluidité de 1 dg/min., un pic de fusion cristalline de 116°C et un taux de cristallinité de 30%, commercialisé sous la dénomination NORSOFLEX FW 1600. La polyoléfine cristalline utilisée aux exemples 3 et 5 est un terpolymère éthylène/butène-1/propylène de densité 0,900, ayant un indice de fluidité de 7,5 dg/min., un pic de fusion cristalline de 113°C et un taux de cristallinité de 20%, commercialisé sous la dénomination NORSOFLEX MW 1920.

TABLEAU I

| Exemple | 1 | 2 | 3 | 4 | 5 |
|---|---|---|---|---|---|
| Polynorbornène | 55,4 | 55,4 | 55,4 | 68,7 | 68,7 |
| Plastifiant | 83,2 | 83,2 | 83,2 | 103 | 103 |
| Charge | 22,2 | 22,2 | 22,2 | 27,5 | 27,5 |
| Antidégradant | 1,1 | 1,1 | 1,1 | 1,4 | 1,4 |
| Agent de vulcanisation | 6,1 | 6,1 | 6,1 | 7,4 | 7,4 |
| Agent de stabilisation | 6,0 | 6,0 | 6,0 | 7,5 | 7,5 |
| Pigment | 5,5 | 5,5 | 5,5 | 6,9 | 6,9 |
| Lubrifiant | 0,6 | 0,6 | 0,6 | 0,7 | 0,7 |
| Accélérateur de vulcanisation | 5,0 | 5,0 | 5,0 | 6,1 | 6,1 |
| Polyoléfine | 44,6 | 44,6 | 44,6 | 31,3 | 31,3 |
| Dureté Shore A | 78 | 61 | 52 | 51 | 45 |
| Allongement à la rupture | 190 | 430 | 350 | 360 | 330 |
| Module à 100% d'allongement | 7,8 | 1,8 | 0,7 | 1,2 | 0,5 |
| set d'allongement | 26 | 11 | 6 | 9 | 8 |
| D R C | 49 | 45 | 40 | 37 | 32 |

Exemple 6 (comparatif)

En reproduisant le même processus de préparation qu'à l'exemple 1, on formule une composition dans laquelle :

- la polyoléfine et le polynorbornène utilisé sont les mêmes qu'à l'exemple 1,
- le plastifiant est une huile naphténique commercialisée par la société TEXACO sous la denomination DEALEN 25.
- la charge est du noir de carbone commercialisé sous la dénomination noir 990 MT (classe 9 selon la norme ASTM-D 1765),
- l'antidégradant est un mélange équipondéral de sel de zinc du mercaptobenzimidazole commercialisé par la société SAFIC-ALCAN sous la dénomination ZMBI et de 2,2,4-triméthyl-1,2-dihydroquinoléine polymérisée commercialisée par la socïete MONSANTO sous la dénomination FLECTOL H.
- le lubrifiant est l'acide stéarique,
- l'agent de vulcanisation est un mélange équipondéral de disulfure de tétraméthylthiurame et de 4,4,-dithiodimorpholine,
- l'accélérateur de vulcanisation est un mélange de dibutyldithiocarbamate de zinc, de phényléthyldithiocarbamate de zinc, d'éthyl-dithiocarbamate de tellure et d'oxyde de zinc dans des rapports pondéraux 2/0,5/1/3.
- le stabilisant est un produit commercialisé par la société BAYER sous la dénomination VULKALENT E.
- l'élastomère est un terpolymère, commercialisé par la société GOODRICH sous la référence EP 5875, comprenant 70% en poids d'éthylène, 22% en poids de propylène et 8% en poids de diène et ayant une viscosité Mooney de 50 à 125°C.

Les quantités pondérales des divers ingrédients de la composition sont indiquées dans le tableau II ci-après, ainsi que les résultats des mesures de propriétés effectuées comme décrit ci-dessus.

Exemples 7 à 10

En opérant dans les mêmes conditions qu'à l'exemple 6 et en utilisant les mêmes ingrédients, à l'exception de la nature de la polyoléfine cristalline, on prépare différentes compositions dont les propriétés sont indiquées dans le tableau II ci-après.

La polyoléfine cristalline utilisée aux exemples 7 et 9 est la même que celle utilisée aux exemples 2 et 4. La polyoléfine cristalline utilisée à l'exemple 8 est la même que celle utilisée à l'exemple 3. La polyoléfine cristalline utilisée à l'exemple 10 est un copolymère éthylène/octène-1 de densité 0,918, ayant un indice de fluidité de 5,4 dg/min et un taux de cristallinité de 35%, commercialisé par la société DSM sous la dénomination STAMYLEX 1046.

TABLEAU II

| Exemple | 6 | 7 | 8 | 9 | 10 |
|---|---|---|---|---|---|
| Polynorbornène | 38 | 42 | 42 | 57 | 38 |
| Plastifiant | 85 | 93 | 93 | 128 | 85 |
| Charge | 38 | 41 | 41 | 57 | 38 |
| Antidégradant | 0,8 | 0,8 | 0,8 | 1,6 | 0,8 |
| Agent de vulcanisation | 1,2 | 1,2 | 1,2 | 1,7 | 1,2 |
| Lubrifiant | 0,2 | 0,2 | 0,2 | 0,3 | 0,2 |
| Accélérateur de vulcanisation | 2,4 | 2,6 | 2,6 | 3,7 | 2,4 |
| Stabilisant | 0,4 | 0,4 | 0,4 | 0,6 | 0,4 |
| Polyoléfine | 52 | 48 | 48 | 29 | 52,5 |
| Elastomère | 9,5 | 10 | 10 | 14 | 9,5 |
| Dureté Shore A | 78 | 50 | 42 | 34 | 62 |
| Allongement à la rupture | 320 | 420 | 400 | 370 | 440 |
| Module à 100% d'allongement | 5,1 | 0,7 | 0,5 | 0,4 | 1,8 |
| set d'allongement | 13 | 10 | 10 | 8 | 16 |
| D R C | 45 | 40 | 44 | 34 | 38 |

EXEMPLE 11

En opérant dans les conditions de l'exemple 7 et en utilisant les mêmes ingrédients à l'exception de l'absence d'élastomère, on prépare une composition dont les propriétés sont indiquées dans le tableau III ci-après.

Outre les propriétés déjà mesurées pour les exemples 6 à 10, on mesure :

- la résistance à la rupture, exprimée en MPa et déterminée selon la norme ASTM-D 412,
- le taux de gonflement volumique après un séjour de 168 heures à 100°C dans 1 huile référencée ASTM 3, exprimé en pourcentage et déterminé selon la norme ASTM D 471.

EXEMPLE 12

En opérant dans les conditions de l'exemple 11 et en utilisant les mêmes ingrédients mais en leur ajoutant un copolymère statistique comprenant environ 91% en poids de propylène et environ 9% en poids d'éthylène, ayant un indice de fluidité de 2 dg/min. (déterminé selon la norme ASTM D 1238 à 230°C sous 2,16 kg), commercialisé par la Société SOLVAY sous la dénomination ELTEX PKL 104, on prépare une composition dont les propriétés sont indiquées dans le tableau III ci-après.

TABLEAU III

| Exemple | 11 | 12 |
|---|---|---|
| Polynorbornène | 51 | 47 |
| Plastifiant | 114 | 85 |
| Charge | 51 | 47 |
| Antidégradant | 0,5 | 0,5 |
| Agent de vulcanisation | 1,5 | 1,4 |
| Lubrifiant | 0,5 | 0,5 |
| Accélérateur de vulcanisation | 3,3 | 3,0 |
| Stabilisant | 0,5 | 0,5 |
| Norsoflex FW 1600 | 49 | 41 |
| Eltex PKL 104 | 0 | 12 |
| Dureté Shore A | 55 | 60 |
| Allongement à la rupture | 370 | 320 |
| Module à 100% d'allongement | 2,0 | 2,6 |
| set d'allongement | 11 | 12 |
| D R C | 32 | 35 |
| Résistance à la rupture | 4,4 | 7,0 |
| Gonflement volumique | >200* | 120 |

* éprouvette détruite

**Revendications**

**Revendications pour les Etats contractants suivants : AT, BE, CH, LI, DE, DK, FR, GB, IT, LU, NL, SE**

1. Composition comprenant un mélange de 20 à 70 parties en poids de polynorbornène, de 80 à 30 parties en poids d'une polyoléfine cristalline et d'une quantité de plastifiant du polynorbornène suffisante pour abaisser sa température de transition vitreuse jusqu'à la gamme des caoutchoucs, caractérisée en ce que,

comme polyoléfine cristalline, on choisit un copolymère d'éthylène et d'au moins une α-oléfine ayant de 3 à 10 atomes de carbone, ledit copolymère ayant une densité comprise entre 0,89 et 0,93, un taux de cristallinité compris entre 15 et 50 % et un indice de fluidité compris entre 0,5 et 15 dg/min.

2. Composition conforme à la revendication 1, caractérisé en ce que le polynorbornène est réticulé.

3. Composition selon l'une des revendications 1 et 2, caractérisée en ce que le copolymère est un copolymère d'hétérogénéité macromoléculaire dans lequel la teneur en α-oléfine varie selon les fractions cristallines ou amorphes, entre 1/10e de la teneur moyenne et 5 fois la teneur moyenne.

4. Composition selon l'une des revendications 1 à 3, caractérisée en ce qu'elle comprend en outre au moins un élastomère oléfinique, celui-ci venant en remplacement partiel du polynorbornène, de telle sorte que la somme du copolymère éthylène/α-oléfine, du polynorbornène et de l'élastomère oléfinique soit égale à 100 parties en poids.

5. Composition selon la revendication 4, caractérisée en ce que l'élastomère oléfinique est un terpolymère d'éthylène, d'au moins une α-oléfine ayant de 3 à 6 atomes de carbone et d'au moins un diène.

6. Composition selon l'une des revendications 4 et 5, caractérisée en ce que l'élastomère oléfinique est un terpolymère éthylène-propylène-diène comprenant de 15 à 60 % en moles de motifs dérivés du propylène, et de 0,1 à 20 % en moles de motifs dérivés du diène.

7. Composition selon l'une des revendications 5 et 6, caractérisée en ce que le diène est choisi parmi les diènes linéaires ou cycliques, conjugués ou non conjugués.

8. Composition selon l'une des revendications 4 à 7, caractérisée en ce que l'élastomère oléfinique est utilisé en proportion allant jusqu'au tiers du poids du polynorbornène.

9. Composition selon la revendication 3, caractérisée en ce que le copolymère éthylène/α-oléfine présente un pic unique de fusion à une température comprise entre 110 et 130°C.

10. Composition selon l'une des revendications 3 et 9, caractérisée en ce que le copolymère éthylène/α-oléfine comprend une seule α-oléfine et possède un indice de polydispersité entre 3 et 9.

11. Composition selon l'une des revendications 3, 9 et 10, caractérisée en ce que le poids moléculaire moyen en nombre du copolymère éthylène/α-oléfine est compris entre 12000 et 60000.

12. Composition selon la revendication 2, caractérisée en ce que le polynorbornène est réticulé jusqu'au point où pas plus de 10 % du polynorbornène puisse être extrait par un solvant.

13. Composition selon l'une des revendications 1 à 12, caractérisée en ce qu'elle comprend en outre au moins un additif choisi parmi les pigments blancs ou colorés, les agents de couplage, les antidégradants, les stabilisants, les adjuvants de mise en oeuvre, les charges pulvérulentes et les lubrifiants.

14. Composition selon la revendication 13, caractérisée en ce que ledit additif est une charge pulvérulente utilisée à raison de jusqu'à 150 parties pour 100 parties en poids du polynorbornène.

15. Procédé de préparation d'une composition selon la revendication 2, caractérisé en ce qu'on malaxe un mélange de polynorbornène, de plastifiant, de copolymère éthylène/α-oléfine et d'un système de réticulation, à une température comprise entre 110 et 220°C et pendant une durée comprise entre 3 et 15 minutes, pour réticuler le polynorbornène.

16. Composition selon l'une des revendications 2 à 14, caractérisée en ce qu'elle comprend en outre une quantité efficace d'un caoutchouc de polyéthylène chlorosulfoné.

17. Composition selon la revendication 16, caractérisée en ce que le caoutchouc de polyéthylène chlorosulfoné comprend de 10 à 50 % en poids de chlore et de 0,5 à 3 % en poids de soufre.

18. Composition selon l'une des revendications 16 et 17, caractérisée en ce que la quantité de caoutchouc de polyéthylène chlorosulfoné est comprise entre 2 et 40 % en poids par rapport à la quantité de polynorbornène.

19. Composition selon l'une des revendications 2 à 14 et 16 à 18, caractérisée en ce que jusqu'à 60 % en poids du copolymère éthylène/α-oléfine est remplacé par un polymère, d'indice de fluidité (déterminé selon la norme ASTM D 1238 à 230°C sous 2,16 kg) compris entre 0,3 et 10 dg/min, comprenant au moins 80 % en moles de motifs dérivés du propylène et au plus 20 % en moles de motifs dérivés d'un comonomère choisi parmi l'éthylène et les α-oléfines ayant de 4 à 12 atomes de carbone.

**Revendications pour les Etats contractants suivants : ES, GR**

1. Procédé de fabrication d'articles élastomères consistant à transformer par extrusion, injection-moulage ou moulage par compression une composition obtenue par vulcanisation dynamique d'un mélange de
   - 20 à 70 parties en poids de polynorbornène,
   - 80 à 30 parties en poids d un copolymère d'éthylène et d'au moins une α-oléfine ayant de 3 à 10 atomes de carbone, ledit copolymère ayant une densité comprise entre 0,89 et 0,93 environ, un taux de cristallinité compris entre 15 et 50% environ et un indice de fluidité compris entre 0,5 et i5 dg/min environ,
   - une quantité de plastifiant du polynorbornène suffisante pour abaisser sa température de transition vitreuse jusqu'à la gamme des caoutchoucs, et
   - un système de réticulation du polynorbornène.

2. Procédé de fabrication selon la revendication 1, caractérisé en ce que la composition est transformée par extrusion sur une extrudeuse ayant un rapport longueur/diamètre de vis compris entre 18 et 28, la température de la composition dans l'extrudeuse étant comprise entre 150°C et 220°C.

3. Procédé de fabrication selon la revendication 2, caractérisé en ce que la vitesse d'extrusion se situe entre 15 et 50 mètres par minute.

4. Procédé selon l'une des revendications 1 à 3, caractérisé en ce que le mélange soumis à vulcanisation comprend en outre au moins un élastomère oléfinique, celui-ci venant en remplacement partiel du polynorbornène, de telle sorte que la somme du copolymère éthylène/α-oléfine, du polynorbornène et de l'élastomère oléfinique soit égale à 100 parties en poids.

5. Procédé de fabrication selon l'une des revendications 1 à 4, caractérisé en ce que le mélange soumis à vulcanisation comprend en outre au moins une charge pulvérulente à raison de jusqu'à 150 parties en poids pour 100 parties en poids de polynorbornène.

6. Procédé de fabrication selon l'une des revendications 1 à 5, caractérisé en ce que le mélange soumis à vulcanisation comprend en outre une quantité efficace d'un caoutchouc de polyéthylène chlorosulfoné.

7. Procédé selon l'une des revendications 1 à 6, caractérisé en ce que dans le mélange soumis à vulcanisation jusqu'à 60% en poids du copolymère éthylène/α-oléfine est remplacé par un polymère, d'indice de fluidité (déterminé selon la norme ASTM D 1238 à 230°C sous 2,16 kg) compris entre 0,3 et 10 dg/min., comprenant au moins 80% en moles de motifs dérivés du propylène et au plus 20% en moles de motifs dérivés d'un comonomère choisi parmi l'éthylène et les α-oléfines ayant de 4 à 12 atomes de carbone.

8. Procédé de fabrication selon la revendication 1, caractérisé en ce que la composition est transformée par injection dans une presse, la température de la matière dans la presse étant comprise entre 120°C et 200°C.

9. Article élastomère obtenu par un procédé de fabrication selon l'une des revendications 1 à 8.

**Claims**

**Claims for the following Contracting States : AT, BE, CH, DE, DK, FR, GB, IT, LI, LU, NL, SE**

1. Composition comprising a mixture of 20 to 70 parts by weight of polynorbornene, of 80 to 30 parts by weight of a crystalline polyolefin and of an amount of a plasticiser for the polynorbornene which is sufficient to lower its glass transition temperature to within the range of the rubbers, characterised in that, as the crystalline polyolefin, there is chosen a copolymer of ethylene and of at least one α-olefin having from

3 to 10 carbon atoms, the said copolymer having a density of between 0.89 and 0.93, a degree of crystallinity of between 15 and 50 % and a fluidity index of between 0.5 and 15 dg/min.

2. Composition according to Claim 1, characterised in that the polynorbornene is crosslinked.

3. Composition according to one of Claims 1 and 2, characterised in that the copolymer is a copolymer with macromolecular heterogeneity, in which the content of α-olefin varies, depending on the crystalline or amorphous fractions, between 1/10 of the mean content and 5 times the mean content.

4. Composition according to one of Claims 1 to 3, characterised in that it furthermore comprises at least one olefinic elastomer, the latter being introduced as a partial replacement for the polynorbornene, so that the sum of the ethylene/α-olefin copolymer, the polynorbornene and the olefinic elastomer is equal to 100 parts by weight.

5. Composition according to Claim 4, characterised in that the olefinic elastomer is a terpolymer of ethylene, at least one α-olefin having from 3 to 6 carbon atoms and at least one diene.

6. Composition according to one of Claims 4 and 5, characterised in that the olefinic elastomer is an ethylene-propylene-diene terpolymer comprising from 15 to 60 mol % of units derived from propylene and from 0.1 to 20 mol % of units derived from the diene.

7. Composition according to one of Claims 5 and 6, characterised in that the diene is chosen from among the linear or cyclic, conjugated or non-conjugated dienes.

8. Composition according to one of Claims 4 to 7, characterised in that the olefinic elastomer is used in a proportion ranging up to one-third of the weight of the polynorbornene.

9. Composition according to Claim 3, characterised in that the ethylene/α-olefin copolymer has a single melting peak at a temperature of between 110 and 130°C.

10. Composition according to one of Claims 3 and 9, characterised in that the ethylene/α-olefin copolymer contains only one α-olefin and has a polydispersity index of between 3 and 9.

11. Composition according to one of Claims 3, 9 and 10, characterised in that the number-average molecular weight of the ethylene/α-olefin copolymer is between 12,000 and 60,000.

12. Composition according to Claim 2, characterised in that the polynorbornene is crosslinked up to the point where not more than 10 % of the polynorbornene can be extracted by a solvent.

13. Composition according to one of Claims 1 to 12, characterised in that it furthermore comprises at least one additive chosen from among white or coloured pigments, coupling agents, anti-degradation agents, stabilisers, processing adjuvants, pulverulent fillers and lubricants.

14. Composition according to Claim 13, characterised in that the said additive is a pulverulent filler used in an amount of up to 150 parts per 100 parts by weight of the polynorbornene.

15. Process for the preparation of a composition according to Claim 2, characterised in that a mixture of polynorbornene, plasticiser, ethylene/α-olefin copolymer and a crosslinking system is malaxated at a temperature of between 110 and 220°C for a period of between 3 and 15 minutes in order to crosslink the polynorbornene.

16. Composition according to one of Claims 2 to 14, characterised in that it furthermore comprises an effective quantity of a chlorosulphonated polyethylene rubber.

17. Composition according to Claim 16, characterised in that the chlorosulphonated polyethylene rubber comprises from 10 to 50 % by weight of chlorine and from 0.5 to 3 % by weight of sulphur.

18. Composition according to one of Claims 16 and 17, characterised in that the quantity of chlorosulphonated polyethylene rubber is between 2 and 40 % by weight relative to the quantity of polynorbornene.

19. Composition according to one of Claims 2 to 14 and 16 to 18, characterised in that up to 60 % by weight

of the ethylene/α-olefin copolymer is replaced by a polymer of fluidity index (determined according to Standard Specification ASTM D 1238 at 230°C under 2.16 kg) of between 0.3 and 10 dg/min, comprising at least 80 mol % of units derived from propylene and at most 20 mol % of units derived from a comonomer chosen from among ethylene and the α-olefins having from 4 to 12 carbon atoms.

**Claims for the following Contracting States : ES, GR**

1. Process for the manufacture of elastomeric articles, which consists in converting, by extrusion, injection-moulding or compression moulding, a composition obtained by dynamic vulcanisation of a mixture of
   20 to 70 parts by weight of polynorbornene,
   80 to 30 parts by weight of a copolymer of ethylene and at least one α-olefin having from 3 to 10 carbon atoms, the said copolymer having a density of between 0.89 and 0.93 approximately, a degree of crystallinity of between 15 and 50 % approximately and a fluidity index of between 0.5 and 15 dg/min approximately,
   an amount of a plasticiser for the polynorbornene which is sufficient to lower its glass transition temperature to within the range of the rubbers, and
   a crosslinking system for the polynorbornene.

2. Manufacturing process according to Claim 1, characterised in that the composition is converted by extrusion in an extruder having a screw length/diameter ratio of between 18 and 28, the temperature of the composition in the extruder being between 150°C and 220°C.

3. Manufacturing process according to Claim 2, characterised in that the speed of extrusion is between 15 and 50 metres per minute.

4. Process according to one of Claims 1 to 3, characterised in that the mixture subjected to vulcanisation furthermore comprises at least one olefinic elastomer, the latter being introduced as a partial replacement for the polynorbornene, so that the sum of the ethylene/ α-olefin copolymer, the polynorbornene and the olefinic elastomer is equal to 100 parts by weight.

5. Manufacturing process according to one of Claims 1 to 4, characterised in that the mixture subjected to vulcanisation furthermore comprises at least one pulverulent filler in an amount of up to 150 parts by weight per 100 parts by weight of polynorbornene.

6. Manufacturing process according to one of Claims 1 to 5, characterised in that the mixture subjected to vulcanisation furthermore comprises an effective amount of a chlorosulphonated polyethylene rubber.

7. Process according to one of Claims 1 to 6, characterised in that in the mixture subjected to vulcanisation, up to 60 % by weight of the ethylene/α-olefin copolymer are replaced by a polymer, of fluidity index (determined according to Standard Specification ASTM D 1238 at 230°C under 2.16 kg) of between 0.3 and 10 dg/min, comprising at least 80 mol % of units derived from propylene and at most 20 mol % of units derived from a comonomer chosen from among ethylene and the α-olefins having from 4 to 12 carbon atoms.

8. Manufacturing process according to Claim 1, characterised in that the composition is converted by injection in a press, the temperature of the material in the press being between 120°C and 200°C.

9. Elastomeric article obtained by a manufacturing process according to one of Claims 1 to 8.

**Patentansprüche**

**Patentansprüche für folgende Vertragsstaaten : AT, BE, CH, DE, DK, FR, GB, IT, LI, LU, NL, SE**

1. Zusammensetzung, bestehend aus einer Mischung von 20 bis 70 Gewichtsanteilen Polynorbornen, 80 bis 30 Gewichtsanteilen eines kristallinen Polyolefins und einer genügend hohen Weichmachermenge für das Polynorbornen, um deren Glastemperatur bis in den Bereich von Kautschuk zu senken, dadurch gekennzeichnet, daß als kristallines Polyolefin ein Copolymer aus Ethylen und mindestens einem alpha-Olefin mit 3 bis 10 Kohlenstoffatomen gewählt wird, wobei das genannte Copolymer eine Dichte zwischen

0,89 und 0,93, einen Kristallisationsgrad zwischen 15 und 50 % und eine Fluiditätszahl zwischen 0,5 und 15 dg/min aufweist.

2. Zusammensetzung, die dem Anspruch 1 gerecht wird, dadurch gekennzeichnet, daß das Polynorbornen vernetzt ist.

3. Zusammensetzung nach den Ansprüchen 1 und 2, dadurch gekennzeichnet, daß das Copolymer makromolekule Heterogenität aufweist, wobei der Gehalt an alpha-Olefin, abhängig von betrachteten kristallinen oder amorphen Einheiten, zwischen 1/10 des Durchschnittsgehaltes und dem Sfachen des Durchschnittsgehaltes variiert.

4. Zusammensetzung nach einem der Ansprüche 1 bis 3, dadurch gekennzeichnet, daß sie unter anderem mindestens ein olefinisches Elastomer beinhaltet, das als teilweiser Ersatz des Polynorbornens eingesetzt wird, so daß die Summe aus Ethylen/alpha-Olefin Copolymer, Polynorbornen und olefinischem Elastomeren 100 Gewichtsanteilen entspricht.

5. Zusammensetzung nach Anspruch 4, dadurch gekennzeichnet, daß das olefinische Elastomer ein Terpolymeres aus Ethylen, mindestens einem alpha-Olefin mit 3 bis 6 Kolenstoffatomen und mindestens einem Dien ist.

6. Zusammensetzung nach einem der Ansprüche 4 und 5, dadurch gekennzeichnet, daß das olefinische Elastomer ein Ethylen-Propylen-Dien-Terpolymer ist, das 15 bis 60 Molprozente vom Propylen abgeleitete Kettenglieder und 0,1 bis 20 Molprozente vom Dien abgeleitete Kettenglieder beinhaltet.

7. Zusammensetzung nach einem der Ansprüche 5 und 6, dadurch gekennzeichnet, daß das Dien unter den linearen oder cyclischen, den konjugierten oder nicht konjugierten Dienen ausgewählt wird.

8. Zusammensetzung nach einem der Ansprüche 4 bis 7, dadurch gekennzeichnet, daß das olefinische Elastomer bis zu einem Anteil eingesetzt wird, der bis zu einem Drittel des Polynorbornengewichtes ausmacht.

9. Zusammensetzung nach Anspruch 3, dadurch gekennzeichnet, daß das Ethylen/alpha-Olefin Copolymer einen einzigen Schmelzpunkt zwischen 110 und 130°C aufweist.

10. Zusammensetzung nach einem der Ansprüche 3 bis 9, dadurch gekennzeichnet, daß das Ethylen/alpha-Olefin Copolymer ein einzelnes alpha-Olefin beinhaltet und eine Polydispersitätszahl zwischen 3 und 9 besitzt.

11. Zusammensetzung nach einem der Ansprüche 3, 9 und 10, dadurch gekennzeichnet, daß die mittlere Molgewichtszahl des Ethylen/alpha-Olefin Copolymeren zwischen 12000 und 60000 liegt.

12. Zusammensetzung nach Anspruch 2, dadurch gekennzeichnet, daß das Polynorbornen so hoch vernetzt ist, daß nicht mehr als 10 % Polynorbornen mit einem Lösemittel extrahierbar sind.

13. Zusammensetzung nach einem der Ansprüche 1 bis 12, dadurch gekennzeichnet, daß sie unter anderem mindestens ein Additiv enthält, das unter weißen oder farbigen Pigmenten, Haftvermittlern, Alterungsschutzmitteln, Stabilisatoren, Verarbeitungshilfsmitteln, pulverigen Füllstoffen und Gleitmitteln ausgewählt wird.

14. Zusammensetzung nach Anspruch 13, dadurch gekennzeichnet, daß das genannte Additiv ein pulveriger Füllstoff ist, das in Mischungsverhältnissen mit bis zu 150 Gewichtsteilen auf 100 Gewichtsteile Polynorbornen verwendet wird.

15. Verfahren zur Herstellung einer Zusammensetzung nach Anspruch 2, dadurch gekennzeichnet, daß eine Mischung aus Polynorbornen, Weichmacher, Ethylen/alpha-Olefin Copolymer und einem Vernetzungsmittel bei einer Temperatur zwischen 110 und 220°C und während einer Zeitdauer zwischen 3 und 15 Minuten zur Vernetzung des Polynorbornens geknetet wird.

16. Zusammensetzung nach einem der Ansprüche 2 bis 14, dadurch gekennzeichnet, daß sie unter anderem eine ausreichende Menge von chlorsulfoniertem Polyethylenkautschuk enthält.

17. Zusammensetzung nach Anspruch 16, dadurch gekennzeichnet, daß der chlorsulfonierte Polyethylenkautschuk 10 bis 50 Gewichtsprozente Chlor und 0,5 bis 3 Gewichtsprozente Schwefel enthält.

18. Zusammensetzung nach einem der Ansprüche 16 und 17, dadurch gekennzeichnet, daß die Menge an chlorsulfoniertem Polyethylenkautschuk zwischen 2 und 40 Gewichtsprozente bezogen auf die Polynorbornenmenge liegt.

19. Zusammensetzung nach einem der Ansprüche 2 bis 14 und 16 bis 18, dadurch gekennzeichnet, daß bis zu 60 Gewichtsprozente des Ethylen/alpha-Olefin Copolymeren durch ein Polymer ersetz werden, das eine Fluiditätszahl (bestimmt nach der ASTM D 1238 Norm bei 230°C unter 2,16 kg) zwischen 0,3 und 10 dg/min aufweist und mindestens 80 Molprozent vom Propylen abgeleitete Kettenglieder und höchstens 20 Molprozent von einem Comonomeren abgeleitete Kettenglieder beinhaltet, das aus Ethylen und den alpha-Olefinen mit 4 bis 12 Kohlenstoffen ausgewählt wird.

**Patentansprüche für folgende Vertragsstaaten : ES, GR**

1. Verfahren zur Herstellung von elastomeren Gegenständen, das darin besteht durch Extrusion, Injektions- oder Preßverfahren eine Zusammensetzung zu verarbeiten, die durch dynamische Vulkanisation einer Mischung von
   - 20 bis 70 Gewichtsanteilen Polynorbornen,
   - 80 bis 30 Gewichtsanteilen eines Copolymeren aus Ethylen und mindestens einem alpha-Olefin mit 3 bis 10 Kohlenstoffen, wobei genanntes Copolymer eine Dichte zwischen 0,89 und ungefähr 0,93, einen Kristallisationsgrad zwischen 15 und ungefähr 50 % und eine Fluiditätszahl zwischen 0,5 und ungefähr 15 dg/min besitzt,
   - einer genügend hohen Weichmachermenge für das Polynorbornen, um deren Glastemperatur bis in den Bereich von Kautschuk zu senken, und
   - einem Vernetzungsmittel für Polynorbornen erhalten wird.

2. Herstellungsverfahren nach Anspruch 1, dadurch gekennzeichnet, daß die Zusammensetzung durch Extrusion mit einem Extruder, deren Schnecke ein Längen/Durchmesser Verhältnis zwischen 18 und 28 besitzt, verarbeitet wird, wobei die Temperatur der Zusammensetzung in dem Extruder zwischen 150°C und 220°C liegt.

3. Herstellungsverfahren nach Anspruch 2, dadurch gekennzeichnet, daß die Extrusionsgeschwindigkeit zwischen 15 und 50 Meter pro Minute beträgt.

4. Verfahren nach einem der Ansprüche 1 bis 3, dadurch gekennzeichnet, daß die zu vulkanisierende Mischung unter anderem mindestens ein olefinisches Elastomer beinhaltet, das als teilweiser Ersatz des Polynorbornens eingesetzt wird, so daß die Summe aus Ethylen/alpha-Olefin Copolymer, Polynorbornen und des olefinischen Elastomeren 100 Gewichtsanteile beträgt.

5. Herstellungsverfahren nach einem der Ansprüche 1 bis 4, dadurch gekennzeichnet, daß die zu vulkanisierende Mischung unter anderem mindestens einen pulverigen Füllstoff in einem Verhältnis von bis zu 150 Gewichtsanteilen auf 100 Gewichtsanteilen Polynorbornen enthält.

6. Herstellungsverfahren nach einem der Ansprüche 1 bis 5, dadurch gekennzeichnet, daß die zu vulkanisierende Mischung unter anderem eine ausreichende Menge eines chlorsulfonierten Polyethylenkautschuks enthält.

7. Verfahren nach einem der Ansprüche 1 bis 6, dadurch gekennzeichnet, daß in der zu vulkanisierenden Mischung bis zu 60 Gewichtsprozente des Ethylen/alpha-Olefin Copolymeren durch ein Polymer ersetzt werden, das eine Fluiditätszahl (bestimmt nach der ASTM D 1238 Norm bei 230°C unter 2,16 kg) zwischen 0,3 und 10 dg/min aufweist und mindestens 80 Molprozent vom Propylen abgeleitete Kettenglieder und höchstens 20 Molprozent von einem Comonomeren abgeleitete Kettenglieder beinhaltet, das aus Ethylen und den alpha-Olefinen mit 4 bis 12 Kohlenstoffen ausgewählt wird.

8. Herstellungsverfahren nach Anspruch 1, dadurch gekennzeichnet, daß die Zusammensetzung durch Injektion in eine Presse umgeformt wird, wobei die Temperatur der Substanz in der Presse zwischen 120°C und 200°C liegt.

9. Elastomerer Gegenstand, der über ein Herstellungsverfahren nach einem der Ansprüche 1 bis 8 erhalten wird.